# EUROPÄISCHE PATENTSCHRIFT

(11) **EP 1 767 487 B1**
(45) Veröffentlichungstag und Bekanntmachung des Hinweises auf die Patenterteilung: **16.12.2009**
(21) Anmeldenummer: 06017955.3
(22) Anmeldetag: 29.08.2006
(51) Int. Cl.: B66F 9/075, B62D 51/02

(54) **Bodenblech für eine Standplattform eines Flurförderzeugs**
Floor panel for an operator's platform of an industrial truck
Panneau de fond pour une plate-forme d'opérateur d'un chariot de manutention

(30) Priorität: 23.09.2005 DE 102005045505
(43) Veröffentlichungstag der Anmeldung: 28.03.2007
(73) Patentinhaber: Jungheinrich Aktiengesellschaft, 22047 Hamburg (DE)
(72) Erfinder: Fähndrich, Rainer, Dipl.-Ing., 22889 Tangstedt (DE); Niemeier, Karlheinz, Dipl.-Ing., 22846 Norderstedt (DE)
(74) Vertreter: Hauck Patent- und Rechtsanwälte

(56) Entgegenhaltungen:
- EP-A- 0 449 029
- EP-A- 1 547 910
- WO-A-96/24519
- DE-A1-102006 009 330

## Beschreibung

Die Erfindung bezieht sich auf ein Flurförderzeug mit einer Standplattform umfassend ein Bodenblech nach dem Oberbegriff des Patentanspruchs 1.

Bei einer Reihe von Flurförderzeugen steht der Bediener oder Fahrer auf einer Standplattform, deren Zutritt üblicherweise von hinten oder von der Seite ist. Es ist bekannt, Bodenbleche für derartige Standplattformen federnd oder mittels Puffern zu lagern, um die Erschütterungen zu dämpfen.

Es ist ferner bekannt, in das Bodenblech eine Pedalfläche zu integrieren, die mit dem rechten Fuß des Fahrers betätigt wird, um die Fahrfunktion freizugeben. Damit soll sichergestellt werden, daß beim Verlassen des Fahrzeugs während der Fahrt dieses seinen Weg nicht fortsetzt. Es ist ferner bekannt, eine sogenannte Schaltmatte auf dem Bodenblech vorzusehen, welche das Betreten des Bodenblechs erfaßt. Dadurch kann die Schaltfunktion von der Pufferfunktion des Bodenblechs getrennt werden. Eine Schaltmatte ist jedoch relativ aufwendig und dem Verschleiß stark ausgesetzt.

Aus WO-A-96/24519 ist ein schwenkbar gelagertes Bodenblech für die Standplattform eines Flurförderzeugs bekannt geworden, das von einer Feder in eine angehobene Position vorgespannt ist und dem Mittel zur Erfassung des Betretens des Bodenblechs zugeordnet sind.

Der Erfindung liegt die Aufgabe zugrunde, ein Bodenblech für eine Standplattform eines Flurförderzeugs zu schaffen, die alle gewünschten Funktionen des Bodenblechs in wenig aufwendiger Weise vereint und zugleich eine uneingeschränkte Kühlhaustauglichkeit gewährleistet.

Diese Aufgabe wird durch die Merkmale des Patentanspruchs 1 gelöst.

Bei der Erfindung ist unterhalb des Bodenblechs ist ein Näherungssensor, vorzugsweise ein induktiver Sensor, angeordnet, und an der Unterseite des Bodenblechs ist eine Schaltnase so angebracht, daß sie bei einer Verschwenkung des Bodenblechs nach unten gegen die Kraft der Feder durch Überdeckung mit dem Näherungssensor einen Schaltvorgang auslöst.

Näherungssensoren, insbesondere induktive Näherungssensoren sind wenig aufwendig in der Herstellung und können geschützt unterhalb des Bodenblechs angebracht werden. Die Auslösung eines Schaltvorgangs erfolgt durch Annäherung einer Schaltnase, beispielsweise eines Blechstreifens, an die empfindliche Zone des Näherungssensors. Ein derartiger Aufbau ist ohne großen Herstellungs- und Montageaufwand realisierbar.

Nach einer Ausgestaltung der Erfindung ist das vordere Ende des Bodenblechs schwenkbar gelagert, wobei die Schwenklagerung zugleich eine schwimmende Lagerung ermöglicht und das hintere Ende über Puffer abgestützt ist. Die schwimmende Lagerung und die Abstützung über Puffer ermöglicht eine wirksame Dämpfung der Schwingungen und damit einen entsprechenden Komfort für den Fahrer.

Das Bodenblech ist, wie erwähnt, in eine obere Position vorgespannt. Diese wird nach einer Ausgestaltung der Erfindung durch ein Begrenzungsmittel festgelegt, wobei das Bodenblech in der angehobenen Position einen Abstand oberhalb der Puffer aufweist. Die Anordnung der Schaltnase und der oberen Position ist derart, daß die Schaltnase einen Schaltvorgang auslöst, bevor das Bodenblech endgültig auf den Puffern aufliegt, wenn es von einem Fahrer betreten wird.

Nach einer weiteren Ausgestaltung der Erfindung sind Schraubenfedern zur Vorspannung des Bodenblechs in die obere Position um jeweils einen Puffer herum angeordnet, und durch einen axialen Durchgang der Puffer erstreckt sich ein Begrenzungsstift, der am oberen Ende am Bodenblech angreift und am unteren Ende einen mit dem Ende des Puffers zusammenwirkenden Anschlag aufweist.

Eine schwimmende Lagerung des Bodenblechs kann nach einer Ausgestaltung der Erfindung über ein elastisches Element erfolgen, über das das Bodenblech mit Hilfe einer Schraubverbindung befestigt ist.

Der Näherungssensor muß von einem Halter aufgenommen werden. Dieser ist nach einer Ausgestaltung der Erfindung so am Rahmen angebracht, daß er begrenzt parallel zum Bodenblech verstellbar ist. Dadurch kann der Näherungssensor bzw. eine Öffnung im Rahmen, über welche die Schaltnase hindurch zum Näherungssensor geführt ist, in seiner Lage eingestellt werden, so daß ein Scheuern oder Schleifen der Schaltnase am Öffnungsrand vermieden wird. Die Öffnung, über die die Schaltnase zum Näherungssensor hingeführt ist, ist vorzugsweise trichterförmig, wodurch ein problemloses Zentrieren des Halters für den Näherungssensor während der Montage möglich ist.

Ein Ausführungsbeispiel der Erfindung wird nachfolgend anhand von Zeichnungen näher erläutert.
- Fig. 1: zeigt eine perspektivische Ansicht eines Bodenblechs in einem Rahmen einer Standplattform eines Flurförderzeugs von schräg oben gesehen.
- Fig. 2: zeigt die Draufsicht auf die Anordnung nach Fig. 1.
- Fig. 3: zeigt einen Schnitt durch die Darstellung nach Fig. 2 entlang der Linie 3-3.
- Fig. 4: zeigt einen Schnitt durch die Darstellung nach Fig. 2 entlang der Linie 4-4.

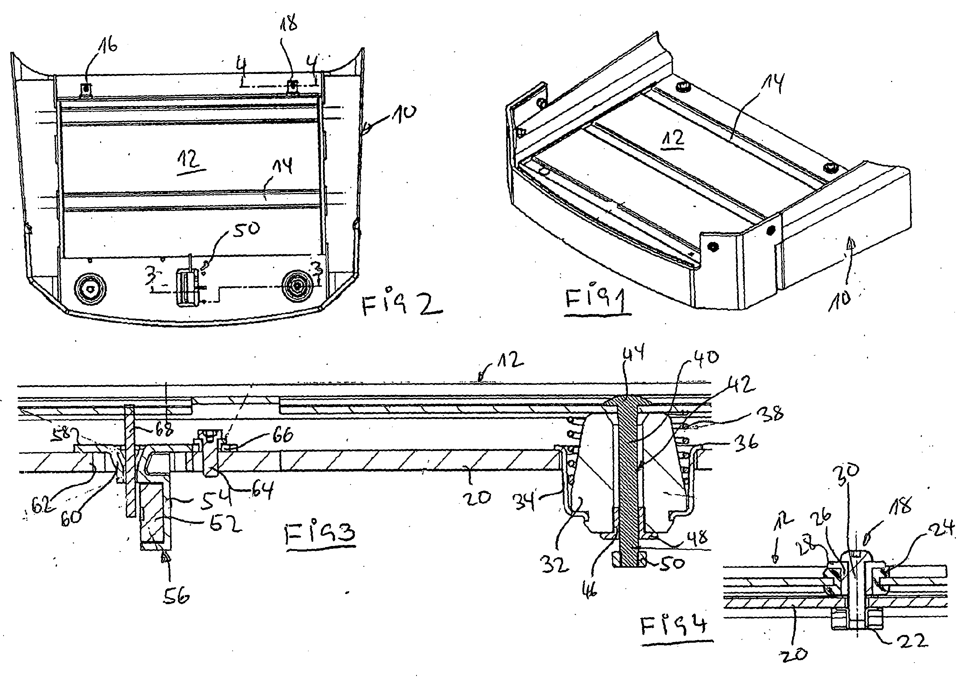

Es sei zunächst angemerkt, daß die Figuren 3 und 4 Teile der Figuren 1 und 2 vergrößert darstellen.

In den Figuren 1 und 2 ist bei 10 ein Rahmen für eine Standplattform eines nicht weiter dargestellten Flurförderzeugs angedeutet. Innerhalb des Rahmens 10 be-findet sich ein Bodenblech 12, das durch parallel im Abstand verlaufende Sicken 14 versteift ist. Das Betreten des Bodenblechs 12 erfolgt von hinten, wo die Rahmenbegrenzung 10 abgesenkt ausgebildet ist. Die Lagerung des Bodenblechs 10 ist aus den Figuren 3 und 4 erkennbar.

An zwei vorderen Stellen 16, 18 (Fig. 2) ist das Bodenblech 12 schwenkbar und schwimmend angelenkt, was in Figur 4 deutlicher zu erkennen ist. Unterhalb des Bodenblechs 12 ist ein Blech 20 des Rahmens 10 angeordnet. Unterhalb des Blechs 20 ist eine Blechmutter 22 angebracht. In einem Loch des Bodenblechs 12 ist eine Buchse 24 aus elastischen Material eingelassen. Sie ist zylindrisch und weist am Umfang eine Ringnut auf, in welcher der Lochrand eingreift. In die Buchse ist eine Metallbuchse 26 mit einem Flansch 28 eingesteckt, durch welche hindurch eine Schraube 30 gesteckt ist, deren Kopf an der Oberseite des Flansches 28 anliegt. Der Gewindeschaft erstreckt sich durch eine Öffnung im Blech 20 und ist in die Blechmutter 22 eingeschraubt. Auf diese Weise kann das Bodenblech verschwenkt werden und ist zugleich auch schwimmend aufgehängt.

Am hinteren Ende ist das Bodenblech 12 über zwei Puffer abgestützt, von welchem in Fig. 4 einer bei 32 dargestellt ist. Der Puffer 32, der konisch ausgebildet ist, stützt sich in einem topfförmigen Halter 34 ab, der in einer Öffnung des Bleches 20 eingesetzt ist, wobei ein umgebogener nach außen ragender Flanschabschnitt 36 sich gegen die Oberseite des Bleches 20 anlegt. Der Puffer 32 ist von einer Schraubenfeder 38 umgeben, die sich am unteren Ende am Umfang des Puffers 32 abstützt und am oberen Ende gegen die Unterseite des Bodenblechs 12 anliegt.

Durch einen axialen Durchgang des Puffers 32 und eine Öffnung im Bodenblech 12 erstreckt sich der Schaft 40 eines Begrenzungsstiftes 42, wobei ein Kopf 44 des Begrenzungsstiftes gegen die Oberseite des Bodenblechs 12 anliegt. In das untere Ende des axialen Durchgangs des Puffers 32 ist eine metallische Buchse 46 eingesteckt, die mit einem Flansch 48 an der Unterseite des Puffers 32 anliegt. Der Schaft 40 erstreckt sich durch die Buchse 46 nach unten. Auf das untere Ende ist eine Mutter 50 unverlierbar aufgeschraubt. Sie dient als Anschlag für den Puffer, was noch beschrieben werden soll.

In Figur 3 hat das Bodenblech 12 eine Position, die es einnimmt, wenn ein Fahrer das Bodenblech 12 betritt. Das Bodenblech liegt auf den Puffern 32 auf und kann sich in seine Ebene beschränkt bewegen, wie weiter oben bereits erläutert. Schwingungen des Fahrzeugs werden über die Puffer 32 und die elastischen Buchsen 24 gedämpft. Entfernt sich der Fahrer vom Bodenblech 12 drückt die Feder 38 das Bodenblech 12 in eine angehobene Position bis die Mutter 50 gegen den Flansch 48 der Buchse 46 anschlägt. Dadurch ist die obere Position erreicht, wobei das Bodenblech 12 vom Puffer 32 einen vorgegebenen Abstand von mehreren Millimetern hat.

Etwa auf der Verbindungslinie der Puffer 32 annähernd mittig ist eine Sensoranordnung 50 vorgesehen, die ebenfalls in Figur 3 näher dargestellt ist.

Ein induktiver Näherungssensor 52 ist in einer Ausnehmung eines topfförmigen Abschnitts 54 eines Halters 56 aufgenommen. Die empfindliche Fläche des Sensors 52 erstreckt sich annähernd vertikal. Ein flanschförmiger Abschnitt 58 des Halters liegt auf der obigen Seite des Bleches 20 auf, und ein trichterförmiger Abschnitt 60 erstreckt sich durch eine Öffnung 62 im Blech 20, die überdimensioniert ist, so daß der Halter 56 in der Ebene des Bleches 20 bewegt werden kann, wenn eine Schraube 64, mit der der Flanschabschnitt 58 am Blech 20 befestigt ist, gelöst wird. Eine Öffnung 66 im Flanschabschnitt 58 ist als Langloch ausgeführt und ermöglicht mithin die Verschiebung des Halters 56 und damit des Sensors 52. An der Unterseite des Bodenblechs 12 ist ein flacher Blechstreifen 68 angebracht, der sich durch den trichterförmigen Abschnitt 60 nach unten erstreckt. Der Blechstreifen verläuft parallel zur vertikalen Fläche des Sensors 52 in einem gewünschten Abstand von 1 bis 5 Millimetern. Der Streifen 58 ist annähernd mittig durch den trichterförmigen Abschnitt 60 hindurchgeführt und berührt nicht seine Innenwände.

Wie schon erwähnt, ist in Figur 3 die nach unten geschwenkte Position des Bodenblechs 12 dargestellt, wodurch der Blechstreifen 68 den Näherungssensor 52 aktiviert. Wird das Bodenblech 12 beim Verlassen nach oben geschwenkt, entfernt sich der Blechstreifen 68 nach oben um eine Strecke, die ausreicht, den Näherungssensor 52 zu deaktivieren.

Wird mit dem Näherungssensor 52 ein Schaltvorgang ausgelöst, dann gelangt ein entsprechendes Signal auf eine nicht gezeigte Steuervorrichtung, die mit der Steuerung des Flurförderzeugs kommuniziert, wodurch die Fahrfunktion freigegeben wird.

## Patentansprüche

1. Flurförderzeug mit einer Standplattform umfassend ein Bodenblech (12), das schwenkbar an der Standplattform gelagert ist und dem Mittel zugeordnet sind, die das Betreten des Bodenblechs erfassen, wobei das Bodenblech (12) von einer Feder (38) in eine angehobene Position vorgespannt ist, **dadurch gekennzeichnet, dass** unterhalb des Bodenblechs (12) ein Näherungssensor (52) angeordnet ist und an der Unterseite des Bodenblechs (12) eine Schaltnase (68) so angebracht ist, daß sie bei einer Verschwenkung des Bodenblechs (12) nach unten gegen die Kraft der Feder (38) durch Überdeckung mit dem Näherungssensor (52) einen Schaltvorgang auslöst.

2. Flurförderzeug nach Anspruch 1, **dadurch gekennzeichnet, daß** das Bodenblech am vorderen Ende schwenkbar gelagert ist, wobei seine Lagerung zugleich eine schwimmende Lagerung ermöglicht und das hintere Ende über Puffer (32) abgestützt ist.

3. Flurförderzeug nach Anspruch 2, **dadurch gekennzeichnet, daß** ein Begrenzungsmittel das Bodenblech (12) in der angehobenen Position nach oben begrenzt und das Bodenblech in der angehobenen Position einen vorgegebenen Abstand von dem Puffer (32) aufweist.

4. Flurförderzeug nach Anspruch 3, **dadurch gekennzeichnet, daß** die Schaltnase (68) den Schaltvorgang auslöst, bevor das Bodenblech (12) endgültig auf den Puffern (32) aufliegt.

5. Flurförderzeug nach Anspruch 3 oder 4, **dadurch gekennzeichnet, daß** jeder Puffer (32) von einer Schraubenfeder (38) umgeben ist und ein Begrenzungsstift (42) durch einen axialen Durchgang des Puffers (32) erstreckt ist, der am oberen Ende am Bodenblech (12) angreift und am unteren Ende einen mit dem unteren Ende des Puffers (32) zusammenwirkenden Anschlag (50) aufweist.

6. Flurförderzeug nach einem der Ansprüche 2 bis 5, **dadurch gekennzeichnet, daß** das Bodenblech über eine Schraubverbindung und ein elastisches Element am Rahmen befestigt ist.

7. Flurförderzeug nach Anspruch 6, **dadurch gekennzeichnet, daß** ein buchsen-förmiges elastisches Element (24) in einer Öffnung des Bodenblechs (12) sitzt und eine Schraube (32) durch eine Metallbuchse (26), die in dem elastischen Element (24) sitzt geführt und in einen Gewindeabschnitt des Rahmens (20) eingeschraubt ist.

8. Flurförderzeug nach einem der Ansprüche 1 bis 7, **dadurch gekennzeichnet, daß** ein Halter (56) für einen induktiven Näherungssensor (52) am Rahmen (20) so befestigbar ist, daß er parallel zum Bodenblech (12) begrenzt verstellbar ist.

9. Flurförderzeug nach einem der Ansprüche 1 bis 8, **dadurch gekennzeichnet, daß** die Schaltnase (68) durch eine trichterförmige Öffnung zum darunter angeordneten Näherungssensor (52) geführt ist.

10. Flurförderzeug nach Anspruch 8 und 9, **dadurch gekennzeichnet, daß** die Öffnung am Halter (56) ausgebildet ist.

11. Flurförderzeug nach einem der Ansprüche 1 bis 10, **dadurch gekennzeichnet, daß** die Schaltnase (68) von einem magnetisch wirkenden Blechabschnitt gebildet ist.

## Claims

1. An industrial truck with an operator's platform comprising a floor panel (12) that is pivotally mounted on the operator's platform and to which are assigned means which detect the access to the floor panel, wherein the floor panel (12) is biased into a lifted position by a spring (38), **characterised in that** a proximity sensor (52) is arranged below the floor panel (12) and a shift lug (68) is arranged on the lower side of the floor panel (12) such that it initiates a switching operation by covering the proximity sensor (52) when the floor panel (12) is swivelled downward against the force of the spring (38).

2. An industrial truck according to claim 1, **characterised in that** the floor panel (12) is pivotally mounted on its front end, wherein its bearing permits a floating bearing at the same time, and the rear end is supported via bumpers (32).

3. An industrial truck according to claim 2, **characterised in that** a limiting means limits the floor panel (12) towards the upside in the lifted position, and the floor panel has a given distance from the bumper (32) in the lifted position.

4. An industrial truck according to claim 3, **characterised in that** the shift lug (68) triggers the switching operation before the floor panel (12) rests definitively on the bumpers (32).

5. An industrial truck according to claim 3 or 4, **characterised in that** each bumper (32) is surrounded by a helical spring (38) and a limiting pin (42) extends through an axial passage of the bumper (32), said limiting pin acting on the floor panel (12) on its upper end and having a stop (50) at its lower end that co-operates with the lower end of the bumper (32).

6. An industrial truck according to any one of claims 2 to 5, **characterised in that** the floor panel (12) is fixed on the frame via a screw connection and an elastic element.

7. An industrial truck according to claim 6, **characterised in that** a bushing-shaped elastic element (24) sits in an opening of the floor panel (12) and a screw (32) is guided through a metal bushing (26) which sits in the elastic element (24), and is screwed into a threaded portion of the frame (20).

8. An industrial truck according to any one of claims 1 to 7, **characterised in that** a holder (56) for an inductive proximity sensor (52) is adapted to be fixed on the frame (20) such that it can be adjusted parallel to the floor panel (12) in a limited extent.

9. An industrial truck according to any one of claims 1 to 8, **characterised in that** the shift lug (68) is guided through a funnel-shaped opening towards the proximity sensor (52) which is arranged below.

10. An industrial truck according to claim 8 and 9, **characterised in that** the opening is formed on the holder (56).

11. An industrial truck according to any one of claims 1 to 10, **characterised in that** the shift lug (68) is formed by a magnetically acting portion of the panel.

## Revendications

1. Chariot de manutention avec une plate-forme d'opérateur comportant un panneau de fond (12) qui est logé de façon pivotante dans la plate-forme d'opérateur et auquel sont associés des moyens qui détectent l'accès au panneau de fond, le panneau de fond (12) étant précontraint en une position élevée par un ressort (38), **caractérisé en ce que** un capteur de proximité (52) est disposé au-dessous du panneau de fond (12) et un nez de commande (68) est disposé sur le côté inférieur du panneau de fond (12) de sorte qu'il déclenche une opération de commutation en recouvrant le capteur de proximité (52) quand le panneau de fond (12) est pivoté en bas contre la force du ressort (38).

2. Chariot de manutention selon la revendication 1, **caractérisé en ce que** le panneau de fond (12) est logé de façon pivotante dans son extrémité de front, son palier permettant au même temps un logement flottant et l'extrémité arrière étant supportée par des tampons (32).

3. Chariot de manutention selon la revendication 2, **caractérisé en ce que** dans la position levée, un moyen de fin de course limite le panneau de fond (12) vers le haut et le panneau de fond a un écart donné du tampon (32) dans la position levée.

4. Chariot de manutention selon la revendication 3, **caractérisé en ce que** le nez de commande (68) déclenche l'opération de commutation avant que le panneau de fond (12) repose définitivement sur les tampons (32).

5. Chariot de manutention selon la revendication 3 ou 4, **caractérisé en ce que** chaque tampon (32) est entouré par un ressort cylindrique (38) et que une broche de limite (42) s'étend à travers un passage axial du tampon (32), ladite broche de limite actionnant sur le panneau de fond (12) dans son extrémité supérieure et ayant une butée (50) dans son extrémité inférieure qui coopère avec l'extrémité inférieure du tampon (32).

6. Chariot de manutention selon l'une quelconque des revendications 2 à 5, **caractérisé en ce que** le panneau de fond (12) est fixé dans le cadre au travers d'une connexion à vis et un élément élastique.

7. Chariot de manutention selon la revendication 6, **caractérisé en ce que** un élément élastique en forme de douille (24) est assis dans une ouverture du panneau de fond (12) et une vis (32) est guidée à travers une douille métallique (26) qui est à son part assise dans l'élément élastique et la vis est vissée dans une portion filetée du cadre (20).

8. Chariot de manutention selon l'une quelconque des revendications 1 à 7, **caractérisé en ce que** un support (56) pour un capteur de proximité (52) inductif peut être fixé dans le cadre (20) de sorte qu'il est ajustable en parallèle au panneau de fond (12) de façon limitée.

9. Chariot de manutention selon l'une quelconque des revendications 1 à 8, **caractérisé en ce que** le nez de commande (68) est guidé à travers une ouverture en forme de trompette vers le capteur de proximité (52) qui est disposé en dessous.

10. Chariot de manutention selon la revendication 8 et 9, **caractérisé en ce que** l'ouverture est formée sur le support (56).

11. Chariot de manutention selon l'une quelconque des revendications 1 à 10, **caractérisé en ce que** le nez de commande (68) est formé par une partie du panneau qui agit de façon magnétique.
